# EUROPEAN PATENT APPLICATION

(11) **EP 2 772 972 A1**
(43) Date of publication of application: **03.09.2014**
(21) Application number: 12842998.2
(22) Date of filing: 19.10.2012
(51) Int. Cl.: H01M 4/66, H01M 4/02, H01M 4/13, H01M 4/64

(54) **ELECTRODE MATERIAL, ELECTRODE AND SECONDARY BATTERY**

(30) Priority: 27.10.2011 JP 2011236215; 03.09.2012 JP 2012192850
(71) Applicant: Kabushiki Kaisha Kobe Seiko Sho (Kobe Steel, Ltd.), Kobe-Shi, Hyogo 651-8585 (JP)
(72) Inventor: KATSURA Sho, Kobe-shi Hyogo 651-2271 (JP); HOSOKAWA Mamoru, Kobe-shi Hyogo 651-2271 (JP); TAKADA Satoru, Kobe-shi Hyogo 651-2271 (JP); SUZUKI Jun, Kobe-shi Hyogo 651-2271 (JP); SATO Toshiki, Kobe-shi Hyogo 651-2271 (JP)
(74) Representative: Müller-Boré & Partner Patentanwälte PartG mbB
(86) International application number: PCT/JP2012/077119
(87) International publication number: WO 2013/061889

(57) **Abstract**

An electrode material for a secondary battery, which realizes a lowered contact resistance between the electrode material and an active material layer, is provided. A collector (electrode material) includes: a substrate 1a including a metal foil; and a conductive material 1b, wherein the conductive material 1b contains a carbon black having a BET specific surface area of 300 m²/g or less and an attached amount of the carbon black per unit area on the surface of the substrate 1a is 400 mg/m² or less.

## Description

### Technical Field

The present invention relates to an electrode material to be used for an electrode in a secondary battery, an electrode using the electrode material, and a secondary battery using the electrode.

### Background Art

Studies on collectors in which a carbonaceous conductive material is applied on a metal foil such as an aluminum foil or a copper foil to be used as a substrate of an electrode for a secondary battery have been hitherto conducted in various research institutes. Also, a large number of patent applications have been filed and, for example, Patent Documents 1 to 4 are exemplified.

Patent Documents 1 and 2 describe collectors in which a film composed of carbon fine particles (conductive materials) that are conductive materials and a film-forming compound is formed on the surface of a substrate such as an aluminum foil or a copper foil. Moreover, Patent Document 3 describes a collector in which a conductive layer composed of a carbon powder (conductive material) and a binder is placed between active materials. Further, Patent Document 4 describes a collector in which a conductive coating layer containing carbon as a conductive agent is placed on the surface. In these, contact resistance between the collectors and active material layers formed thereon is reduced, and thus it has been intended to improve high-speed charge-discharge characteristics and cycle characteristics of batteries.

### Prior Art Documents

### Patent Documents

| | |
|---|---|
| Patent Document 1: | JP-A-2007-226969 |
| Patent Document 2: | JP-A-2010-135338 |
| Patent Document 3: | JP-A-9-97625 |
| Patent Document 4: | JP-A-2001-351612 |

### Summary of the Invention

### Problems that the Invention is to Solve

However, it has been desired to further reduce the contact resistance between a collector and an active material layer.

Accordingly, an object of the present invention is to provide: an electrode material which is possible to further reduce the contact resistance with the active material layer in the case where the electrode material is used as an electrode in a secondary battery; and a secondary battery which realizes reduction of internal resistance.

### Means for Solving the Problems

In order to solve the above problems, the electrode material according to the present invention includes: a substrate including a metal foil; and a conductive material placed on at least one surface of the substrate, wherein the conductive material contains a carbon black having a BET specific surface area of 300 m²/g or less and an attached amount of the carbon black per unit area on the surface of the substrate is 400 mg/m² or less.

According to such a constitution, in the case where the electrode material is used as an electrode in a secondary battery, the contact resistance between the electrode material and the active material layer is lowered by using a small amount of the carbon black.

In addition, in the electrode material according to the present invention, it is preferred that the BET specific surface area of the carbon black is 200 m²/g or less.

According to such a constitution, in the case where the electrode material is used as an electrode in a secondary battery, the contact resistance between the electrode material and the active material layer is further lowered by using a small amount of the carbon black.

In the electrode in a secondary battery according to the present invention, the above-described electrode is used and an active material layer is formed on a surface of the conductive material placed in the electrode material.

According to such a constitution, the contact resistance between the electrode material that is a collector and the active material layer is lowered by the conductive material placed on the surface of the substrate.

The secondary battery according to the present invention includes a positive electrode and a negative electrode, wherein the electrode according to the present invention is used in at least one of the positive electrode and the negative electrode.

According to such a constitution, since the contact resistance between the electrode material that is a collector and the active material layer is lowered in the electrode in the secondary battery, the internal resistance is lowered as a secondary battery.

### Advantages of the Invention

According to the electrode material of the present invention, in the case where the electrode material is used as an electrode in a secondary battery, since the contact resistance between the electrode material and the active material layer is lowered by the carbon black having such a BET specific surface area placed on the electrode material, a large effect of reducing the contact resistance can be obtained.

According to the electrode of the present invention, the contact resistance between the electrode material and the active material layer can be reduced.

Moreover, according to the secondary battery of the present invention, internal resistance can be reduced.

### Brief Description of the Drawings

FIG. 1 is a schematic cross-sectional view for illustrating the structure of the collector according to the present invention.
FIG. 2 is a schematic cross-sectional view for illustrating the structure of an electrode using the collector according to the present invention.
FIG. 3 is a schematic cross-sectional view for illustrating the structure of a secondary battery using the electrode according to the present invention.
FIG. 4 is a flow chart showing a flow of the method for manufacturing a collector according to the present invention.

### Embodiments for Carrying Out the Invention

The following will describe an embodiment of the electrode material (hereinafter also referred to as collector) according to the present invention in detail.

### [Structure of collector]

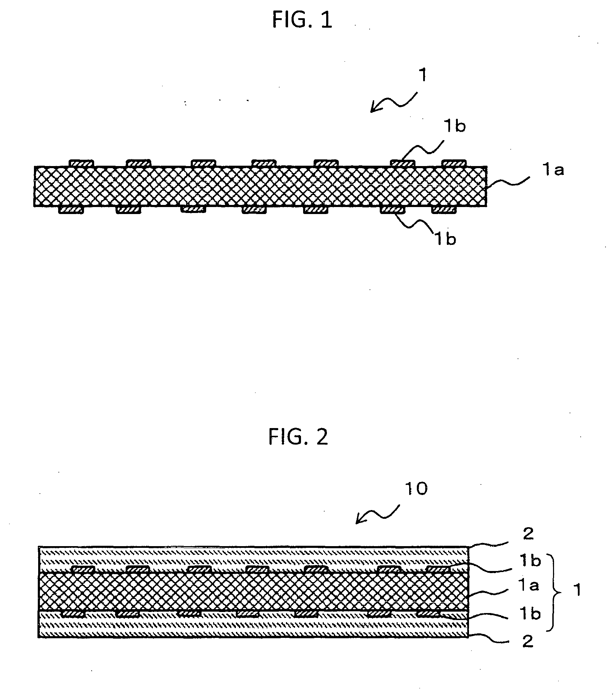

The structure of the collector according to the present embodiment will be described with reference to FIG. 1.

In the example shown in FIG. 1, the collector (electrode material) 1 according to the present embodiment is composed of a substrate 1 a composed of a metal foil and a conductive material 1b disposed on the surface of the substrate 1a. Moreover, the conductive material 1b is disposed on both surfaces of the substrate 1a. The conductive material 1b may be disposed on the surface of the substrate 1a not in an island shape but in a thin-film form uniformly. Furthermore, the conductive material 1b may be disposed on one surface of the substrate 1a.

Here, it is preferable that the conductive material 1b is disposed in an island shape or in a thin-film form on the surface of the substrate 1a when observed with a square visual field having an area of 0.1 mm² (visual field of about 300 µm square) in an arbitrary region of the surface of the substrate 1a on which the conductive material 1b is disposed.

In the present specification, the "island shape" means a state where the conductive material 1b is disposed so that at least a part of the surface of the substrate 1a is exposed without being covered with the conductive material 1b. For example, a plurality of agglomerates of the conductive material 1b may be disposed with being isolated one another as shown in FIG. 1 or the agglomerates may be joined one another to be disposed in a reticulate form.

Moreover, even in the case where the conductive material 1b is disposed on the surface of the substrate 1a in any state of the island shape or the thin-film form, it is preferable that a carbon black having a BET specific surface area of 300 m²/g or less is contained such that a carbon-attached amount is 400 mg/m² or less in the conductive material 1b, the BET specific surface area being measured by "JIS Z 8830:2001 Measurement method of specific surface area of powder (solid) by gas adsorption method". Thereby, contact resistance can be reduced in comparison with the case where a carbon black having a BET specific surface area of more than 300 m²/g is used in the same carbon-attached amount. Moreover, it is further preferable to use a carbon black having a BET specific surface area of 200 m²/g or less. Thereby, a remarkable effect of reducing the contact resistance can be obtained. The lower limit of the BET specific surface area is not particularly defined but is preferably 20 m²/g or more for ideally dispersing the carbon black in the conductive material.

The collector 1 according to the present embodiment can be suitably used, for example, as a collector for an electrode in a lithium ion secondary battery.

Since a large effect of reducing the contact resistance can be obtained in a small carbon amount, the amount of the conductive material 1b, i.e., the thickness of the conductive material 1b can be decreased and, as a result, the thickness of the electrode 10 (see FIG. 2) using the collector 1 can be decreased.

The electrode using the collector 1 will be described later.

It is said that conductivity exhibition by a carbon black is relevant to easiness of formation of conductive paths (linkage of carbon black particles each other). In general, it is considered that the conductive paths are formed more easily with an increase in the BET specific surface area of the carbon black. However, as a result of extensive studies, it has been found that the use of a carbon black having a small BET specific surface area is contrarily effective for the exhibition of the effect of reducing the contact resistance in the case where the conductive material 1b is attached on the surface of the substrate 1a in a small amount (specifically, 400 mg/m² or less) (for example, in the case of being formed in an island shape or in a thin-film form).

At present, the mechanism of reducing the contact resistance by using the carbon black having a BET specific surface area of 300 m²/g or less in comparison with the case of using other carbon has not been elucidated, but the mechanism is presumed as follows. Since carbon black particles are made less prone to form agglomerates one another by the use of particles having a small BET specific surface area, the size of the formed agglomerates becomes small and the number of the agglomerates becomes large. Therefore, it is presumed that contact points between the metal foil that is the substrate 1a in the collector 1 and the carbon black that is the conductive material 1b increase and, as a result, the conductive paths increase to reduce the contact resistance. The effect of reducing the contact resistance by using the carbon black having a BET specific surface area of 300 m²/g or less is especially effectively exhibited in the case where the conductive material 1b is applied on the substrate 1a in an island shape or in a thin-film form.

The following will describe individual constitutional elements.

### (Substrate)

As the substrate 1a, a metal such as aluminum (Al) or copper (Cu) that is commonly used as a collector 1 in the electrode for secondary batteries can be used. In the case of using as the collector 1 in the electrode for secondary batteries, the substrate 1a is generally used in a form of a foil having a thickness of about 5 to 50 µm.

The substrate 1a is not limited to Al, Cu or the like having a specific composition and, in the case of using as an electrode, various pure metals and alloys thereof suitable for the use environment of the electrode can be used.

### (Conductive material)

The conductive material 1b is formed in an island shape or in a thin-film form on the surface of the substrate 1a and reduces the contact resistance between the collector 1, which is constituted of the conductive material together with the substrate 1a, and the active material layer 2 (see FIG. 2).

The conductive material 1b contains a resin and the like in addition to the carbon black that is an intrinsic conductive material and is fixed to the surface of the substrate 1 a as a mixed body thereof.

As the carbon black contained in the conductive material 1b, as mentioned above, it is preferable to use a carbon black having a BET specific surface area of 300 m²/g or less and it is further preferable to use a carbon black having a BET specific surface area of 200 m²/g or less.

As the carbon black contained in the conductive material 1b, various carbon blacks can be used, and examples thereof include acetylene black, Ketjen black, VULCAN XC-72 (manufactured by Cabot Corporation) and the like.

Moreover, the attached amount of the carbon black (carbon-attached amount) contained in the conductive material 1b on the surface of the substrate 1a is preferably controlled to 400 mg/m² or less, in order to exhibit the effect induced by decreasing the BET specific surface area.

Furthermore, the carbon-attached amount is desirably controlled to 1 mg/m² or more, preferably 20 mg/m² or more, and further preferably 40 mg/m² or more. The contact points between the substrate 1a and the conductive material 1b can be sufficiently secured and the effect of reducing the contact resistance can be obtained.

### (Electrode)

The following will describe the constitution of the electrode in a lithium ion secondary battery using the collector 1 according to the present embodiment with reference to FIG. 2.

An electrode 10 shown in FIG. 2 is constituted by the collector 1 according to the present embodiment, which is shown in FIG. 1, and the active material layer 2 laminated on the surfaces (both surfaces) of the collector 1. In the case of constituting the positive electrode in the lithium ion secondary battery, a metal such as Al or an Al alloy can be used as the collector 1. Moreover, as a positive electrode active material, conventional materials, for example, lithium-containing oxides such as LiCoO₂ LiNiO₂, and LiMn₂O₄ can be used. A method for manufacturing the active material layer 2 in the positive electrode is also not particularly limited and the layer can be manufactured by conventional methods, for example, by adding a binder, and if needed, a conductive material, a solvent and the like, to the powdery lithium-containing oxide described above and thoroughly kneading them, and subsequently applying the kneaded article on the collector 1, followed by drying and pressing. The active material layer 2 may be laminated on one surface on which the conductive material 1b has been placed.

Moreover, in the case of constituting the negative electrode in the lithium ion secondary battery, as the substrate of the collector 1, a metal such as Cu, a Cu alloy, nickel (Ni), an Ni alloy or stainless steel, can be used. Further, as a negative electrode active material, for example, a graphite-based carbon material can be used, and production can be made in a similar manner as in the method for manufacturing the active material layer 2 of the positive electrode.

### (Secondary battery)

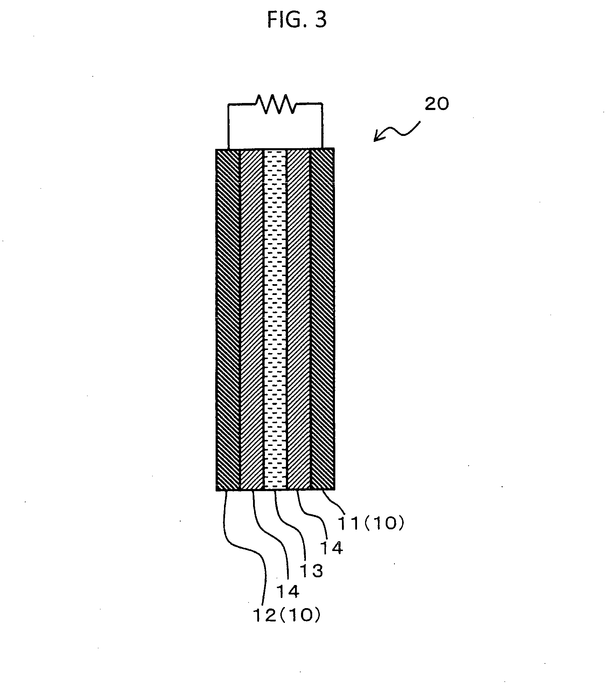

The following will describe the constitution of the lithium ion secondary battery using the electrode 10 using the collector 1 according to the present embodiment, with reference to FIG. 3 (see FIG. 2 as required).

The lithium ion secondary battery (secondary battery) 20 shown in FIG. 3 includes a positive electrode 11 and a negative electrode 12, that are the electrode 10 using the collector 1 according to the present embodiment, a separator 13, and an electrolytic solution 14. The positive electrode 11 and the negative electrode 12 are separated by the separator 13, and the electrolytic solution 14 fills the space between the positive electrode 11 and the negative electrode 12 and the separator 13. Moreover, the entire lithium ion secondary battery 20 is housed in a vessel (not shown in the figure), and a metal-made tab (not shown in the figure) is welded to each of the positive electrode 11 and the negative electrode 12, which are electrically connected to an electrode terminal (not shown in the figure).

In the positive electrode 11 and the negative electrode 12, respective active material layers 2 containing each of the above-described positive electrode active material and negative electrode active material are formed on the surface of the collector 1 according to the present embodiment.

Moreover, the separator 13 and the electrolytic solution 14 can be each constituted using conventional materials. As the separator 13, for example, a polyethylene-based microporous film having a thickness of 20 to 30 µm can be used. As the electrolytic solution 14, for example, a non-aqueous electrolytic solution obtained by dissolving an electrolyte such as LiPF₆ or LiBF₄ in an organic solvent such as propylene carbonate or ethylene carbonate, can be used.

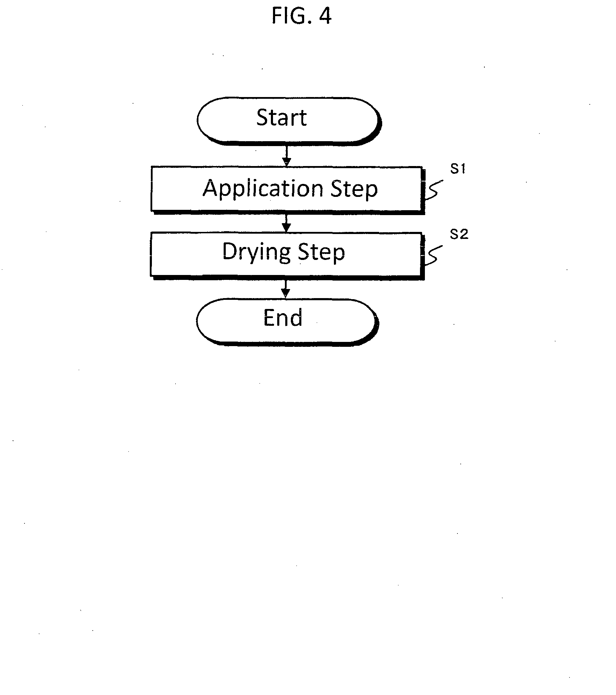

The following will describe the method for manufacturing the collector 1 according to the present embodiment, with reference to FIG. 4 (see FIG. 1 as required).

### [Manufacturing method]

As shown in FIG. 4, the method for manufacturing the collector 1 in the present embodiment includes an application step S1 and a drying step S2 in this order.

The collector 1 can be manufactured by a manufacturing method including the application step S1 of applying a solution (slurry) containing the conductive material 1b on the surface of the substrate 1a composed of a metal foil and the drying step S2 of drying the solution.

### (Application step)

First, the application step S1 will be described.

The conductive material 1b may be disposed in an island shape or may be disposed in a thin-film form on the surface of the substrate 1a. In order to agglomerate the conductive material 1b to form an island structure, it is effective to control the concentration of the conductive material 1b in the solution to be applied on the substrate 1a. This is because the viscosity of the solution is changed when the concentration of the conductive material 1b is controlled and hence a change in the coatability and the distribution of the conductive material 1b after drying occurs.

In the case of using a carbon black as the conductive material 1b, the state where the concentration of the carbon black in the solution is from 0.1 to 7% by mass is preferred. By controlling the concentration of the carbon black to 7% by mass or less, the viscosity of the solution is not exceedingly increased and the agglomeration of particles of the carbon black one another becomes not exceedingly large, so that an ideal island structure can be obtained. Moreover, by controlling the concentration to 0.1% by mass or more, the island structure is formed and also contact points between the carbon black as the conductive material 1b and the metal foil as the substrate 1 a sufficiently exist, so that the effect of reducing the contact resistance between the collector 1 and the active material layer 2 (see FIG. 2) can be obtained. The concentration of the carbon black is more preferably from 0.5 to 5% by mass, and further preferably from 1 to 3% by mass.

Furthermore, by using the carbon black having a BET specific surface area of 300 m²/g or less, and further preferably 200 m²/g or less, an excellent effect of reducing the contact resistance can be obtained in comparison with the case of using the other carbon.

By using the carbon black having such a range of BET specific surface area, fine agglomerates of the carbon black are formed as described above and the carbon black can be dispersed on the surface of the substrate 1a in an island shape or in a thin-film form.

As a solvent of the solution, for example, various solvents of aqueous and organic solvent-based ones such as water, toluene, and N-methylpyrrolidone can be used. Moreover, commonly used thickening agents and fluorine-containing resins, for example, various resins such as carboxymethyl cellulose, polyvinylidene fluoride, styrene-butadiene rubber, and polypropylene, may be added.

For the application of the solution containing the conductive material 1b on the surface of the substrate 1 a, application methods by means of various coaters such as a bar coater, a roll coater, a gravure coater, a dip coater, and a spray coater, which are commonly used, can be used. The conductive material 1b is applied on both surfaces or one surface of the substrate 1a.

### (Drying step)

The drying step S2 is a step of vaporizing the solvent after the application step S 1. In the drying step S2, drying may be performed at room temperature or drying under heating may be performed by using a heat treatment furnace or the like according to needs.

In the case of using the heat treatment furnace, it is preferred that heating is conducted at 80 to 150°C. By controlling the temperature to 80°C or higher, an effect of vaporizing the solvent can be sufficiently obtained and, by controlling the temperature to 150°C or lower, softening of the substrate can be prevented. It is more preferred that heating is conducted at 90 to 120°C. Drying time in the case of using the heat treatment furnace may be appropriately controlled depending on the drying temperature and is preferably from about 0.5 to 30 minutes.

### Examples

The following will describe the collector according to the present embodiment by comparing Examples that satisfy the requirements of the present invention with Comparative Examples that do not satisfy the requirements of the present invention.

Samples were prepared by the following methods.

### (Substrate)

As a substrate, an Al foil having a thickness of 15 µm, which was made of an Al alloy of 1000 type, or a Cu foil having a thickness of 20 µm, which was made of pure copper of 99.99%, was used.

In Tables 1 and 2 described later, which of the Al foil or the Cu foil was used in each sample was shown as "Al" or "Cu" in the column of substrate, respectively.

### (Conductive material)

As a conductive material, various carbon blacks (carbon blacks manufactured by Tokai Carbon Co., Ltd. (Samples No. 1 to No. 4 in Table 1) and other commercially available carbon blacks (Samples No. 5 to No. 9 in Table 1)) were used. Moreover, in Sample No. 10 in Table 1, graphite was used as the conductive material.

### (Application step)

In the application step, water was used as a solvent in a solution containing the conductive material, and CMC (carboxymethyl cellulose; manufactured by Wako Pure Chemical Industries, Ltd.) was added in a concentration of 1% by mass. Moreover, the application of the solution was conducted by means of a bar coater (count No. 5).

### (Drying step)

After the solution containing the conductive material was applied on the surface (one surface) of the Al foil or Cu foil as the substrate, drying was performed by keeping the substrate at room temperature.

### <Evaluation methods>

### (Evaluation of internal resistance of battery)

In the case of using the Al foil as the substrate, a battery cell using the Al foil as a collector was prepared, and the effect of lowering contact resistance was evaluated by measuring internal resistance thereof.

An active material layer was formed on a sample on which the conductive material (carbon) had been formed, thereby preparing a positive electrode for a lithium ion secondary battery. Here, the active material layer having a thickness of about 25 µm was formed by applying, on the surface of the sample on which the conductive material had been formed, a slurry obtained by mixing LiCoO₂ as an active material, acetylene black as a conductive auxiliary, PVdF (polyvinylidene fluoride) as a binder, and NMP (N-methylpyrrolidone) as a solvent in a predetermined ratio and drying the slurry in air at 120°C.

By the same method as the above-described sample preparation, a negative electrode for a lithium ion secondary battery was prepared by applying a slurry containing graphite as an active material on a Cu foil having a thickness of about 15 µm and drying the slurry. By combining it with the above-described positive electrode, a battery cell for internal resistance measurement of a battery was prepared.

For the battery cell prepared, after a predetermined conditioning (adjusting) charge-discharge treatment was conducted, a discharge curve was measured when discharging was performed from a charged state of 4.2 V at each current value in which a discharging rate (C rate) was changed. Then, a relationship between a current value and a voltage value at discharging a capacity of 1 mAh on each discharge curve was plotted, and internal resistance of the battery cell was calculated based on the slope of the straight line obtained by the plotting.

Moreover, by using only a substrate of the Al foil having a thickness of 15 µm and having no conductive material as a collector, a positive electrode was prepared in the same manner as in the case of the other samples, and a battery cell was similarly prepared using the positive electrode. For the battery cell, a discharge curve was determined similarly to the battery cells using the other samples, and internal resistance was calculated. Then, it was judged that those exhibiting reduced internal resistance in comparison with the internal resistance of the battery cell prepared using the collector composed of only this substrate had an effect of reducing the internal resistance, i.e., contact resistance. The internal resistance of the battery cell prepared using only the Al foil that was a substrate as the collector was 45 Ω.

### (Evaluation of contact resistance)

In the case of using the Cu foil as a substrate, the contact resistance was measured as follows to evaluate the effect of lowering the contact resistance.

Both surfaces of a sample was sandwiched with two sheets of a carbon cloth, the outsides were further sandwiched with two sheet of a copper electrode having a contact area of 1 cm², and pressurization was conducted by imparting a load of 1 kgf (9.8 N) to the copper electrode. Then, a current of 7.4 mA was turned on using a direct current power source and a voltage imparted between the carbon cloths was measured on a voltmeter. The contact resistance was determined by calculation from the above-described current value, contact area, and measured voltage. Similar measurement was performed using only the substrate and it was judged that those exhibiting reduced contact resistance in comparison with the case of only the substrate had an effect of reducing the contact resistance. The contact resistance in the case of only the Cu foil as a substrate, which was not subjected to any surface treatment, was about 100 [mΩ·cm² (milliohm square centimeter)].

### (Measurement of carbon-attached amount)

The amount of carbon (carbon black) contained in the conductive material was measured by the following procedure. The mass (W1) of a sample (70 mmx30 mm) obtained by coating one surface of the substrate with the conductive material was measured. Thereafter, the conductive material was removed by wiping the surface with KIMWIPE (a wiping cloth manufactured by NIPPON PAPER CRECIA Co., Ltd.) containing water or an organic solvent, and the mass (W2) of the sample was again measured. A change in mass determined from a difference between both (W1-W2) was taken as the mass (W3) of the conductive material.

Next, an image resulting from observation of the surface of the sample coated with the conductive material by means of an optical microscope at 500 magnifications was captured on a computer and the ratio of carbon contained in the whole visual field (coverage) was calculated by image processing. A product obtained from multiplication of the resulting carbon ratio (coverage) by the mass (W3) of the conductive material was taken as the mass of carbon contained in the conductive material.

The carbon ratio (coverage) is a ratio of the region on which carbon is attached, in the region on which the conductive material is attached. The reason why the carbon ratio is calculated is that it is intended to measure the attached amount of carbon that is an intrinsic conductive material accurately since substances such as a resin are contained in the conductive material (in the mass W1) formed by applying a coating solution containing carbon as a conductive material on the surface of the substrate.

The carbon-attached amount (mg/m²) was calculated by dividing the mass of carbon by the area of the sample (70 mmx30 mm).

Table 1 shows a list of preparation conditions, characteristic evaluation results and judgment results of samples prepared using the Al foil as a substrate. In Table 1, "OO" as a judgment result represents the case of exhibiting a large effect (internal resistance: less than 35 Ω), "O" represents the case of exhibiting a certain effect (internal resistance: 35 to 40 Ω), and "×" represents the case of exhibiting a small effect or no effect (internal resistance: more than 40 Ω). Moreover, in Table 1, a numerical value falling outside the range was underlined.

**[Table 1]**

| Sample No. | Substrate | Concentration of carbon (% by mass) | Species of carbon | BET specific surface area (m²/g) | Carbon-attached amount (mg/m²) | Internal resistance at 1 mAh discharge (Ω) | Judgment |
|---|---|---|---|---|---|---|---|
| 1 | Al | 1 | Carbon black | 30 | 50 | 28 | OO |
| 2 | Al | 2 | Carbon black | 30 | 90 | 27 | OO |
| 3 | Al | 3 | Carbon black | 100 | 140 | 30 | OO |
| 4 | Al | 1 | Carbon black | 140 | 50 | 33 | OO |
| 5 | Al | 1 | Carbon black | 210 | 50 | 35 | O |
| 6 | Al | 1 | Carbon black | 290 | 50 | 36 | O |
| 7 | Al | 10 | Carbon black | 290 | 480 | 41 | × |
| 8 | Al | 9 | Carbon black | 140 | 430 | 42 | × |
| 9 | Al | 1 | Carbon black | 320 | 50 | 43 | × |
| 10 | Al | 1 | Graphite | 31 | 50 | 45 | × |

As shown in Table 1, No. 1 to No. 4 show cases where a carbon black having a BET specific surface area of 200 m²/g or less was used as the carbon that is a conductive material in the solution and the attached amount of the carbon black (carbon) was 400 mg/m² or less. In No. 1 to No. 4, all of them exhibit an internal resistance of less than 35 Ω and a remarkable effect of reducing the internal resistance (i.e., contact resistance) is confirmed in comparison with the case where the BET specific surface area exceeds 300 m²/g (see No. 9).

No. 5 and No. 6 show cases where a carbon black having a BET specific surface area of 300 m²/g or less was used and the attached amount of the carbon black (carbon) was 400 mg/m² or less. In No. 5 and No. 6, both of them exhibit an internal resistance of 40 Ω or less and an effect of reducing the internal resistance (i.e., contact resistance) is confirmed in comparison with the case where the BET specific surface area exceeds 300 m²/g (see No. 9).

No. 7 and No. 8 show cases where a carbon black having a BET specific surface area of 300 m²/g or less was used but the attached amount of the carbon black (carbon) exceeded 400 mg/m². An effect of reducing the internal resistance (i.e., contact resistance) is confirmed as compared to the internal resistance (45 Ω) in the case of using only the Al foil that is a substrate as a collector but, since the carbon-attached amount is large and hence the influence of the resistance of the conductive material itself becomes large, an effect of reducing the internal resistance (i.e., contact resistance) is small in comparison with the cases where the carbon-attached amount is 400 mg/m² or less (see No. 4 and No. 6).

No. 9 shows a case where a carbon black having a BET specific surface area of more than 300 m²/g was used. An effect of reducing the internal resistance (i.e., contact resistance) is confirmed as compared to the internal resistance (45 Ω) in the case of using only the Al foil that is a substrate as a collector but it is found that high internal resistance (i.e., contact resistance) is exhibited in comparison with the cases of No. 1 to No. 6.

No. 10 shows a case where the BET specific surface area was 300 m²/g or less but the species of carbon was different. Since the species of carbon is different, an effect of reducing the internal resistance (i.e., contact resistance) was not confirmed in comparison with the case of using only the Al foil that is a substrate as a collector.

Table 2 shows a list of preparation conditions, characteristic evaluation results and judgment results of samples prepared using the Cu foil as a substrate. In Table 2, "OO" as a judgment result represents the case of exhibiting a large effect (contact resistance: 50 mΩ·cm² or less), "O" represents the case of exhibiting a certain effect (contact resistance: more than 50 mΩ·cm² and 80 mΩ·cm² or less), and "x" represents the case of exhibiting a small effect or no effect (contact resistance: more than 50 mΩ·cm²). Moreover, in Table 1, a numerical value falling outside the range was underlined.

**[Table 2]**

| Sample No. | Substrate | Concentration of carbon (% by mass) | Species of carbon | BET specific surface area (m²/g) | Carbon-attached amount (mg/m²) | Contact resistance (mΩ·cm²) | Judgment |
|---|---|---|---|---|---|---|---|
| 11 | Cu | 1 | Carbon black | 30 | 50 | 29 | OO |
| 12 | Cu | 1 | Carbon black | 140 | 50 | 41 | OO |
| 13 | Cu | 1 | Carbon black | 210 | 50 | 54 | O |
| 14 | Cu | 1 | Carbon black | 290 | 50 | 75 | O |
| 15 | Cu | (no carbon coating) | | - | - | 106 | × |
| 16 | Cu | 1 | Carbon black | 320 | 50 | 92 | × |
| 17 | Cu | 10 | Carbon black | 140 | 440 | 101 | × |

As shown in Table 2, No. 11 and No. 12 show cases where a carbon black having a BET specific surface area of 200 m²/g or less was used as the carbon that is a conductive material in the solution and the attached amount of the carbon black (carbon) was 400 mg/m² or less. Both of them exhibit a contact resistance of 50 mΩ·cm² or less and a remarkable effect of reducing the contact resistance is confirmed in comparison with the case where the BET specific surface area exceeds 300 m²/g (see No. 16).

No. 13 and No. 14 show cases where a carbon black having a BET specific surface area of 300 m²/g or less was used and the attached amount of the carbon black (carbon) was 400 mg/m² or less. In No. 13 and No. 14, both of them exhibit a contact resistance of 80 mΩ·cm² or less and a certain effect of reducing the internal resistance (i.e., contact resistance) is confirmed in comparison with the case where the BET specific surface area exceeds 300 m²/g (see No. 16).

No. 16 shows a case where a carbon black having a BET specific surface area of more than 300 m²/g was used. A slightly lowered resistance is observed as compared to the contact resistance in the case of using only the Cu foil that is a substrate as a collector (No. 15) but it is found that high contact resistance is exhibited in comparison with the cases of No. 11 to No. 14.

No. 17 shows a case where a carbon black having a BET specific surface area of 300 m²/g or less was used but the attached amount of the carbon black (carbon) exceeded 400 mg/m². A slightly lowered resistance is observed as compared to the contact resistance in the case of using only the Cu foil that is a substrate as a collector (No. 15) but it is found that high contact resistance is exhibited in comparison with the cases of No. 11 to No. 14.

While the present embodiments of the present invention has been described in detail and with reference to specific embodiments thereof, it will be appreciated that the present invention is not limited thereto, and the present invention will be carried out with various modification without departing from the scope of the claims.

This application is based on Japanese Patent Application No. 2011-236215 filed on October 27, 2011 and Japanese Patent Application No. 2012-192850 filed on September 3, 2012, the entire subject matters of which are incorporated herein by reference.

### Industrial Applicability

According to the electrode material of the present invention, in the case where the electrode material is used as an electrode in a secondary battery, since the contact resistance between the electrode material and the active material layer is lowered by the carbon black having such a BET specific surface area placed on the electrode material, a large effect of reducing the contact resistance can be obtained.

According to the electrode of the present invention, the contact resistance between the electrode material and the active material layer can be reduced.

Moreover, according to the secondary battery of the present invention, internal resistance can be reduced.

### Description of Reference Numerals and Signs

1: Collector (electrode material)
1a: Substrate
1b: Conductive material
2: Active material layer
10: Electrode
11: Positive electrode (electrode)
12: Negative electrode (electrode)
13: Separator
14: Electrolytic solution
20: Lithium ion secondary battery (secondary battery)

## Claims

1. An electrode material, comprising: a substrate including a metal foil; and a conductive material placed on at least one surface of the substrate, wherein the conductive material contains a carbon black having a BET specific surface area of 300 m²/g or less and an attached amount of the carbon black per unit area on the surface of the substrate is 400 mg/m² or less.

2. The electrode material according to claim 1, wherein the BET specific surface area of the carbon black is 200 m²/g or less.

3. An electrode in a secondary battery, the electrode comprising:
the electrode material according to claim 1; and
an active material layer formed on a surface of the conductive material in the electrode material.

4. A secondary battery, comprising a positive electrode and a negative electrode, wherein at least one of the positive electrode and the negative electrode is the electrode according to claim 3.
